Europäisches Patentamt

European Patent Office

Office européen des brevets

(11) Publication number: **0 092 995**
**B1**

## EUROPEAN PATENT SPECIFICATION

(45) Date of publication of patent specification: **28.06.89**

(51) Int. Cl.⁴: **G 09 G 1/02**

(21) Application number: **83302306.2**

(22) Date of filing: **22.04.83**

(54) Method and apparatus for reading and writing display data.

(30) Priority: **22.04.82 JP 67721/82**

(43) Date of publication of application:
**02.11.83 Bulletin 83/44**

(45) Publication of the grant of the patent:
**28.06.89 Bulletin 89/26**

(84) Designated Contracting States:
**DE FR GB**

(56) References cited:
**WO-A-81/03234
DE-A-3 026 225
US-A-4 094 000
IBM TECHNICAL DISCLOSURE BULLETIN, vol.
14, no. 10, March 1972, p. 3209, NEW YORK
(US), R.D. LINDSEY: "Use of random-access
memory as refresh buffer for display"
IBM TECHNICAL DISCLOSURE BULLETIN, vol.
22, no. 11, April 1980, p. 4954, NEW YORK (US),
F. DESTOMBES et al.: "Raster scan TV
interface"**

(73) Proprietor: **FANUC LTD
3580, Shibokusa Aza-Komanba Oshino-mura
Minamitsuru-gun Yamanashi 401-05 (JP)**

(72) Inventor: **Kurakake, Mitsuo
Izumi-Haitsu 103 3-3-10, Tamadaira
Hino-shi Tokyo (JP)**
Inventor: **Yamauchi, Takashi
Tategaoka-Danchi 4-4-503 1079, Tate-machi
Hachioji-shi Tokyo (JP)**

(74) Representative: **Billington, Lawrence Emlyn
et al
HASELTINE LAKE & CO Hazlitt House 28
Southampton Buildings Chancery Lane
London WC2A 1AT (GB)**

## Description

This invention relates to a method and apparatus for reading and writing data which is to be displayed on the display device of a microcomputer.

In microcomputers, data processed by a central processing unit, referred to as a CPU hereafter, is stored in a random-access memory (RAM) for display on a display device. In such case, the writing of the data into the RAM from the CPU must be carried out during the display of data on the display device. In other words, it is required that data be written into the RAM within the display period. Owing to recent improvements in computer peripherals and interfaces, the time required to produce a display on a display device has been shortened greatly. A display can now be produced at a display clock frequency of from 16 to 20 MHz. By contrast, the time required for writing data into a dynamic RAM is 100 to 150 Ns, making it difficult to obtain enough time for writing processed data from CPU to RAM.

In order to write data from the CPU into the RAM, the conventional practice is to divide the interval between display clock pulses, which are for timing the display presented by the display device, into two portions, the first half of which is time allotted for reading data from RAM to display, the second half of which is time used for writing data from CPU to RAM.

Practicing the foregoing method requires lengthening the period of the display clock, and a parallel/serial conversion is employed for sending and receiving data to and from the RAM. The display clock period can be adjusted, therefore, if the number of bits in the parallel data is selected accordingly. For example, when the period of the display clock is divided into two portions as described earlier, suitable results can be achieved through use of 16 bits, requiring provision of a 16-bit RAM. A RAM of this larger capacity is disadvantageous, however, in view of the higher cost. It would more economical to use a RAM sufficient for handling eight bits of parallel data, namely one half of the former number. The problem with doing so, however, is that the period of the display clock with a RAM for eight bits of parallel data would be half that with a 16-bit RAM. This would be insufficient for writing processed data from the CPU into the RAM during one period of the display clock.

DE-A-3 026 225 discloses a visual display unit in which characters to be displayed are stored in a backing storage, connected to a function control unit and a display control unit. Buffer storages are interposed between the backing storage and the control units for facilitating access by both control units to the backing storage. The buffer storages can be controlled in such a manner that whilst the contents of one are being read out for display, the contents of the other are being updated with fresh display data.

According to a first aspect of the present invention, there is provided an apparatus for reading and writing display data for display on a display device of a microcomputer, comprising:

a central processing unit for processing data;

a random-access memory for storing display data received as processed data from said central processing unit;

a buffer register arranged to read display data out of said random-access memory and temporarily to hold the display data; and characterised by:

a shift register arranged to receive the display data held in said buffer register, and to deliver the display data to the display device in response to a display clock pulse; and in that:

after the display data is read from the random-access memory by the buffer register, the writing of new display data directly from said central processing unit to said random-access memory is enabled, display data being written into said random-access memory once within plural periods of the display clock pulses.

According to a second aspect of the present invention, there is provided a method of reading and writing display data for display on a display device of a microcomputer, comprising the steps of, in order:

reading display data from a random-access memory (RAM) into a buffer;

transferring said display data from the buffer to a shift register, and simultaneously reading new display data (N+1) from the RAM into the buffer;

in response to a display clock pulse, transferring said display data from the shift register to the display device;

transferring said new display data (N+1) from the buffer to the shift register;

writing processed data as further display data from a CPU to the RAM; and

in response to a next display clock pulse, transferring said new display data (N+1) from the shift register to the display device;

whereby one item of processed data is written from the CPU to the RAM in two periods of the display clock pulses.

Accordingly, an embodiment of the present invention may provide a control method and apparatus through which data can be written into a RAM in an interval extending over plural display periods of a display device by using a RAM of a small (parallel) capacity, such as a RAM for handling eight bits of parallel data.

That is, for example, when a single period of a display clock is too short to permit data to be written into a RAM within said period, with use being made of a RAM for, say, eight-bit parallel data, control is effected in such fashion as to allow the data to be written into the RAM within two clock periods.

Reference is made, by way of example, to the accompanying drawings in which:—

Fig. 1 is a block diagram showing the general construction of a system according to the present invention;

Fig. 2 is a time chart, with time shown along the horizontal axis, for describing the operation of the invention;

Fig. 3 is a block diagram illustrating an embodiment of a control apparatus according to the present invention; and

Fig. 4 is a time chart, with time shown along the horizontal axis, for describing the operation of the embodiment illustrated in Fig. 3.

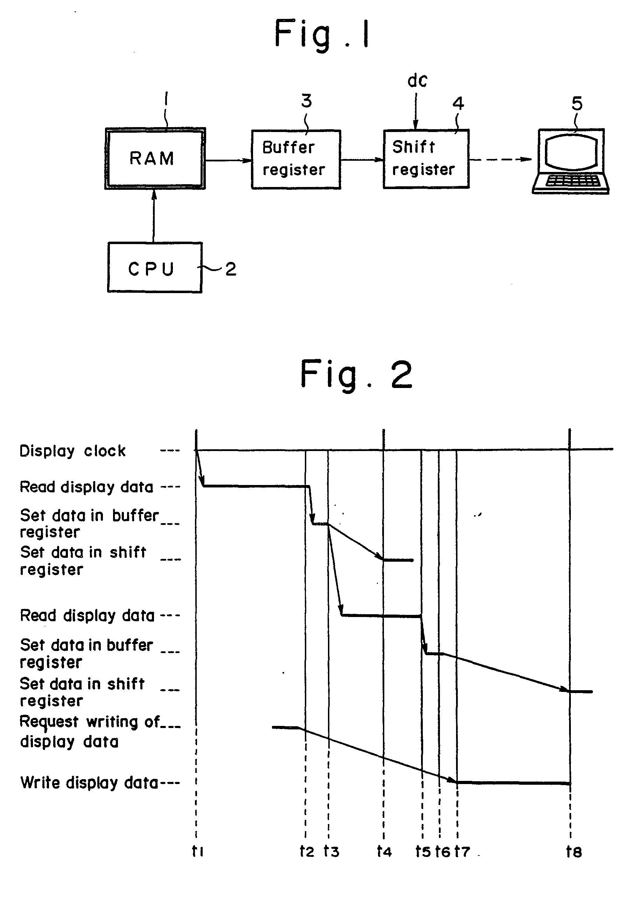

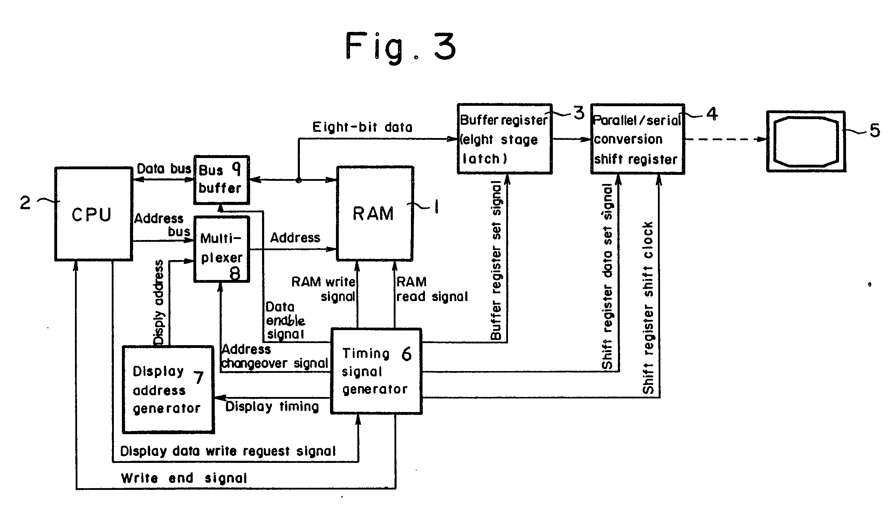

Referring first to Figs. 1 and 3, a control apparatus according to the present invention includes a small-capacity RAM 1 capable of handling, say, eight bits of parallel data, a CPU 2 for processing various kinds of data, a buffer register 3 for temporarily holding display data read out of the RAM 1, and a shift register 4 which receives the display data from the buffer register 3 in the form of a parallel signal for delivering display data to a display device 5 in response to a display clock pulse dc.

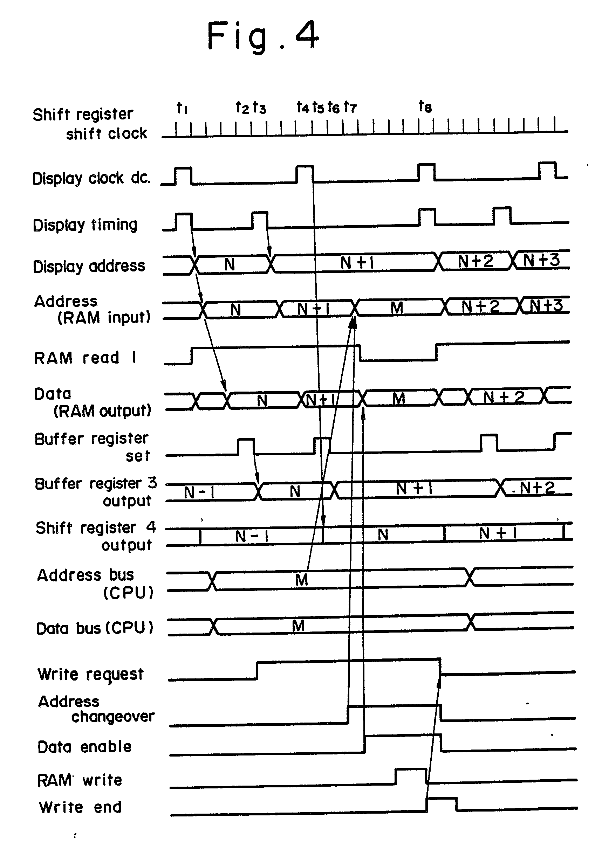

A timing signal generator 6, which comprises an oscillator, a counter and a flip-flop, none of which are shown, produces display timing signals and control signals necessary for system operation, specifically an address changeover signal, a data enable signal, RAM write and read signals, a buffer register set signal, a shift register data set signal, a shift register shift clock, and a CPU write end signal. A display address generator 7 is constituted by a counter (not shown) the output of which serves as a display address. The item of data in the RAM 1 designated by the address is displayed on the display device 5. The address, namely the content of the counter, is incremented each time the timing signal generator 6 produces a display timing pulse (corresponding to times $t_1$, $t_3$ in the time charts of Figs. 2 and 4), with a return to the original address being effected when the final address for one frame is reached. A multiplexer 8 responds to the address changeover signal from the timing signal generator 6 by delivering the address from the CPU 2 or the display address from the display address generator 7. Ordinarily, namely from time $t_1$ to time $t_7$, the multiplexer 8 selects the display address for application to the RAM 1. When data is to be written from the CPU 2 into the RAM 1, namely from time $t_7$ to time $t_8$ in the time charts, the multiplexer 8 supplies the RAM 1 with the address from the CPU 2. Numeral 9 denotes a bus buffer.

The operation of the invention having the foregoing construction will now be described with reference to the time charts of Figs. 2 and 4 and the block diagram of Fig. 3.

First, when a display clock pulse dc arrives at time $t_1$ in Fig. 2, eight-bit display data starts to be read out of the RAM 1 and transferred to the buffer register 3. The reading of the data ends and is set in the buffer register 3 at time $t_2$, whereby the data is temporarily held by buffer register. At the same time, a request is generated for writing display data anew from the CPU 2 into a portion of the RAM 1. At time $t_3$, the contents of the buffer register 3 begin to be transferred to the shift register 4 and, simultaneously, the next item of display data is read into the empty buffer register 3 from the RAM 1. When a display clock pulse dc arrives again at time $t_4$, the shift register 4 transmits display data to the display device 5. The reading of said next item of display data into the buffer register 3 ends at time $t_5$, and data begins to be transferred again from the buffer register 3 to the shift register 4 at time $t_6$. Then, at time $t_7$, processed display data begins to be written from the CPU 2 to the RAM 1, and the writing operation ends by time $t_8$. When the display clock pulse dc arrives at time $t_8$, the shift register 4 begins delivering display data to the display device 5. The foregoing cycle of operations is repeated sequentially in the foregoing fashion, whereby display data is written once per two periods of the display clock pulses.

With the above-described system for reading and writing display data according to present invention, the buffer register 3 is provided to receive and temporarily hold the contents of the RAM 1. At the instant the data is set in the buffer register 3, therefore, new data can start to be written afresh from the CPU 2 to the RAM 1, with the data being written into the RAM once per two display periods of the display device 5, according to the illustrated embodiment. It is therefore possible to employ a RAM of a slow access time, such as a RAM for eight-bit parallel data. Accordingly, an advantage of the present invention is a reduction in cost made possible by using a RAM having a small capacity.

## Claims

1. An apparatus for reading and writing display data for display on a display device (5) of a microcomputer, comprising:
a central processing unit (2) for processing data;
a random-access memory (1) for storing display data received as processed data from said central processing unit (2);
a buffer register (3) arranged to read display data out of said random-access memory (1) and temporarily to hold the display data; and characterised by:
a shift register (4) arranged to receive the display data held in said buffer register (3), and to deliver the display data to the display device (5) in response to a display clock pulse; and in that:
after the display data is read from the random-access memory (1) by the buffer register (3), the writing of new display data directly from said central processing unit (2) to said random-access memory (1) is enabled, display data being written into said random-access memory (1) once within plural periods of the display clock pulses.

2. An apparatus as claimed in claim 1, wherein said random-access memory (1) is adapted to store eight-bit parallel data.

3. An apparatus as claimed in claim 1 or 2, wherein the display data is written into said random access memory (1) once per two display periods of the display device (5).

4. A method of reading and writing display data for display on a display device of a microcomputer, comprising the steps of, in order:

reading display data (N) from a random-access memory (RAM) (1) into a buffer (3);

transferring said display data (N) from the buffer (3) to a shift register (4), and simultaneously reading new display data (N+1) from the RAM (1) into the buffer (3);

in response to a display clock pulse, transferring said display data (N) from the shift register (4) to the display device (5);

transferring said new display data (N+1) from the buffer (3) to the shift register (4);

writing processed data (M) as further display data from a CPU (2) to the RAM (1); and in response to a next display clock pulse, transferring said new display data (N+1) from the shift register (4) to the display device (5); whereby one item of processed data (M) is written from the CPU (2) to the RAM (1) in two periods of the display clock pulses.

**Patentansprüche**

1. Apparat zum Lesen und Schreiben von Anzeigedaten zum Anzeigen auf dem Bildschirm einer Anzeigeeinrichtung (5) eines Mikrocomputers, mit

— einer zentralen Verarbeitungseinheit (2) zum Verarbeiten von Daten,

— einem Speicher mit wahlfreiem Zugriff (1) zum Speichern von Anzeigedaten, die als verarbeitete Daten von der zentralen Verarbeitungseinheit empfangen sind,

— einem Pufferspeicher (3), der vorgesehen ist, um Anzeigedaten aus dem Speicher mit wahlfreiem Zugriff (1) auszulesen und die Anzeigedaten vorübergehend zu halten, und gekennzeichnet durch

— ein Schieberegister (4), das vorgesehen ist, um die Anzeigedaten, die in dem Pufferspeicher (3) gehalten sind, aufzunehmen und um die Anzeigedaten an die Anzeigeeinrichtung (5) zu liefern, und dadurch, daß

— nachdem die Daten aus dem Speicher mit wahlfreiem Zugriff (1) durch den Pufferspeicher (3) ausgelesen sind und das Überschreiben von neuen Anzeigedaten direkt aus der zentralen Verarbeitungseinheit (2) in den Speicher mit wahlfreiem Zugriff (1) freigegeben ist, die Anzeigedaten in den Speicher mit wahlfreiem Zugriff (1) einmal innerhalb mehrerer Perioden der Anzeige-Taktimpulse eingeschrieben werden.

2. Apparat nach Anspruch 1, bei dem der Speicher mit wahlfreiem Zugriff (1) dazu bestimmt ist, 8-bit-Paralleldaten zu speichern.

3. Apparat nach Anspruch 1 oder 2, bei dem die Anzeigedaten in den Speicher mit wahlfreiem Zugriff (1) einmal je zwei Anzeigeperioden der Anzeigeeinrichtung (5) eingeschrieben werden.

4. Verfahren zum Lesen und Schreiben von Anzeigedaten zum Anzeigen auf dem Bildschirm einer Anzeigeeinrichtung eines Mikrocomputers, das Schritte der Reihe nach umfaßt zum:

— Auslesen von Anzeigedaten (N) aus dem Speicher mit wahlfreiem Zugriff (RAM) (1) und Einlesen in einen Pufferspeicher (3),

— Übertragen der Anzeigedaten (N) von dem Pufferspeicher (3) zu einem Schieberegister (4) und gleichzeitigem Auslesen neuer Anzeigedaten (N+1) aus dem RAM (1) und Einlesen in den Pufferspeicher (3),

— Übertragen der Anzeigedaten (N) von dem Schieberegister (4) zu der Anzeigeeinrichtung (5) in Reaktion auf einen Anzeige-Taktimpuls,

— Übertragen neuer Anzeigedaten (N+1) von dem Pufferspeicher (3) zu dem Schieberegister (4),

— Überschreiben von verarbeiteten Daten (M) als weitere Daten von einer CPU (2) zu dem RAM (1) und

— in Reaktion auf einen nächsten Anzeige-Taktimpuls Übertragen der neuen Anzeigedaten (N+1) von dem Schieberegister (4) zu der Anzeigeeinrichtung (5), wodurch ein Wort von verarbeiteten Daten (M) von der CPU (2) zu dem RAM (1) in zwei Perioden der Anzeige-Taktimpulse überschrieben wird.

**Revendications**

1. Un appareil pour lire et écrire des données d'affichage pour affichage sur un dispositif d'affichage (5) d'un microordinateur, comprenant:

une unité de traitement centrale (2) pour traiter les données; une mémoire d'accès aléatoire (1) pour stocker des données d'affichage reçues comme des données traitées de ladite unité de traitement centrale (2);

un registre tampon (3) disposé pour lire les données d'affichage sortant de ladite mémoire d'accès aléatoire (1) et temporairement pour maintenir les données d'affichage; et caractérisé par:

un registre de décalage (4) disposé pour recevoir les données d'affichage maintenues dans ledit registre tampon (3), et pour livrer les données d'affichage au dispositif d'affichage (5) en réponse à une pulsation d'horloge d'affichage; et en ce que: après que les données d'affichage soient lues depuis la mémoire d'accès aléatoire (1) par le registre tampon (3), l'écriture de nouvelles données d'affichage directement depuis ladite unité de traitement centrale (2) à ladite mémoire d'accès aléatoire (1) est permise, les données d'affichage étant écrites dans ladite mémoire d'accès aléatoire (1) une seule fois pour plusieurs périodes de pulsations d'horloge d'affichage.

2. Un appareil selon la revendication 1, dans lequel ladite mémoire d'accès aléatoire (1) est adaptée pour stocker des données parallèles à huit bits.

3. Un appareil selon la revendication 1 ou 2, dans lequel les données d'affichage sont écrites dans une dite mémoire d'accès aléatoire (1) une fois toutes les deux périodes d'affichage du dispositif d'affichage (5).

4. Un procédé de lecture et d'écriture de données d'affichage pour affichage sur un dispositif d'affichage d'un microordinateur, comprenant les opérations suivantes, par ordre:

lecture des données d'affichage (N) depuis une mémoire d'accès aléatoire (RAM) (1) dans un tampon (3); transfert desdites données d'affichage (N) depuis le tampon (3) à un registre de décalage (4) et simultanément lecture de nouvelles données d'affichage (N+1) depuis la RAM (1) dans le tampon (3);

en réponse à une pulsation d'horloge d'affichage, transfert desdites données d'affichage (N) du registre de décalage (4) au dispositif d'affichage (5);

transfert desdites nouvelles données d'affichage (N+1) du tampon (3) au registre de décalage (4);

écriture des données traitées (M) comme nouvelles données d'affichage d'un CPU (2) à la RAM (1); et

en réponse à une nouvelle pulsation d'horloge d'affichage, transfert desdites nouvelles données d'affichage (N+1) du registre de décalage (4) au dispositif d'affichage (5);

un élément des données traitées (M) étant écrit du CPU (2) à la RAM (1) en deux périodes de pulsations d'horloge d'affichage.

# Fig . I

RAM — 1

Buffer register — 3

dc

Shift register — 4

5

CPU — 2

# Fig . 2

Display clock ---

Read display data ---

Set data in buffer register ___

Set data in shift register ___

Read display data ---

Set data in buffer register ___

Set data in shift register __

Request writing of display data ___

Write display data---

t1    t2 t3    t4    t5 t6 t7    t8

# Fig. 3

EP 0 092 995 B1

EP 0 092 995 B1

# Fig.4

| | $t_1$ | $t_2$ $t_3$ | $t_4$ $t_5$ $t_6$ $t_7$ | $t_8$ |

Shift register shift clock

Display clock dc.

Display timing

Display address: N, N+1, N+2, N+3

Address (RAM input): N, N+1, M, N+2, N+3

RAM read 1

Data (RAM output): N, N+1, M, N+2

Buffer register set

Buffer register 3 output: N-1, N, N+1, N+2

Shift register 4 output: N-1, N, N+1

Address bus (CPU): M

Data bus (CPU): M

Write request

Address changeover

Data enable

RAM write

Write end

3